Europäisches Patentamt

European Patent Office

Office européen des brevets

(19)

(11) EP 0 763 802 A2

(12) EUROPÄISCHE PATENTANMELDUNG

(43) Veröffentlichungstag:
19.03.1997 Patentblatt 1997/12

(51) Int. Cl.⁶: $G07C\ 9/00$, $G07F\ 7/10$

(21) Anmeldenummer: 96110807.3

(22) Anmeldetag: 04.07.1996

(84) Benannte Vertragsstaaten:
AT BE CH DE DK ES FR GB GR IE IT LI NL PT SE

(30) Priorität: 18.09.1995 DE 19534666
27.11.1995 DE 19544358
10.04.1996 DE 19614139
11.06.1996 DE 19623288

(71) Anmelder: SC-Info+Inno Technologie
Informationen + Innovationen GmbH + Co.
83618 Feldkirchen/Westerham (DE)

(72) Erfinder: Benzler, Hartwig
83620 Feldkirchen/Westerham (DE)

(54) **Verfahren zur psychometrischen Authentierung**

(57)   Bei einem Verfahren zur psychometrischen Authentierung mit auf Informationsträgern gespeicherten Polyaden, bestehend aus Elementen AE und Elementen ae von personenspezifischen Begriffsassoziationen AE-ae und Zahlen, bei dem aus den Zahlen ein oder mehrere Authentkriterien gebildet werden, werden:

beim Initialisieren Assoziationselemente und Zahlen zunächst in eine regelmäßige Anordnung, in welcher aus den Zahlen das oder die Authentkriterien gebildet werden, danach Assoziationselemente in Verbindung mit je einer oder mehrerer Zahlen in eine willkürliche unregelmäßige Anordnung gebracht und in dieser gespeichert;

beim Authentieren rekonstruiert der Authentand durch Assoziieren der in unregelmäßiger Anordnung befindlichen Assoziationselemente die ursprüngliche regelmäßige Anordnung der Zahlen, in welcher aus den Zahlen das oder die Authentkriterien erneut gebildet werden.

| | | | |
|---|---|---|---|
| Triade | Zahl 1 | $AE_1$ | $ae_1$ |
| Polyade | Zahl 2 | $AE_2$ | $ae_2$ |
| | Zahl 3 | $AE_3$ | $ae_3$ |
| | Zahl 4 | $AE_4$ | $ae_4$ |

Hexade

Abbildung 1

**Beschreibung**

In den Deutschen Patentanmeldungen P 44 02 430.4-35, P 44 16 665.6-35, P 44 19 882.5-35, P 44 23 415.5-35, P 44 30 368.8, P 44 36 340.0, P 44 43 039.6-35, 195 34 666.1-35, 195 44 358.6-35, 196 14 139.7 und 196 23 288.0 sowie in der Europäischen Patentanmeldung Nr. 95 906 972.5-2207 sind Authentverfahren nach dem psychometrischen Prinzip in verschiedener Ausgestaltung offenbart. Dort ist unter anderem beschrieben, wie ungeordnet gespeicherte Elemente von personenspezifischen Assoziationen, z. B. von zusammengehörenden Wortpaaren wie Namen und Vornamen einer Person - mit zugeordneten Zeichen - nach einem nur vom Authentanden reproduzierbaren Plan verknüpft werden, um aus den so geordneten Zeichen ein Authentkriterium abzuleiten.

Es hat sich als zweckmäßig erwiesen, folgende Begriffe einzuführen:

- AE = erstes Assoziationselement;
- ae = zweites Assoziationselement;
- Triade = Dreiergruppe bestehend aus einer Zahl, einem Assoziationselement AE und einem Assoziationselement ae;
- Pentade = Fünfergruppe bestehend aus einer Zahl, zwei Assoziationselementen AE und zwei Assoziationselementen ae;
- Hexade = Sechsergruppe bestehend aus zwei Zahlen, zwei Assoziationselementen AE und zwei Assoziationselementen ae;
- Polyade = Mehrzahlgruppe bestehend aus mehreren Zahlen, mehreren Assoziationselementen AE und mehreren Assoziationselementen ae;
- BZ = Basiszahl;
- EZ = Ergebniszahl = Funktion der BZ;
- DZ = Differenzzahl;
- AZ = Authentzahl = Funktion (BZ, EZ, DZ).

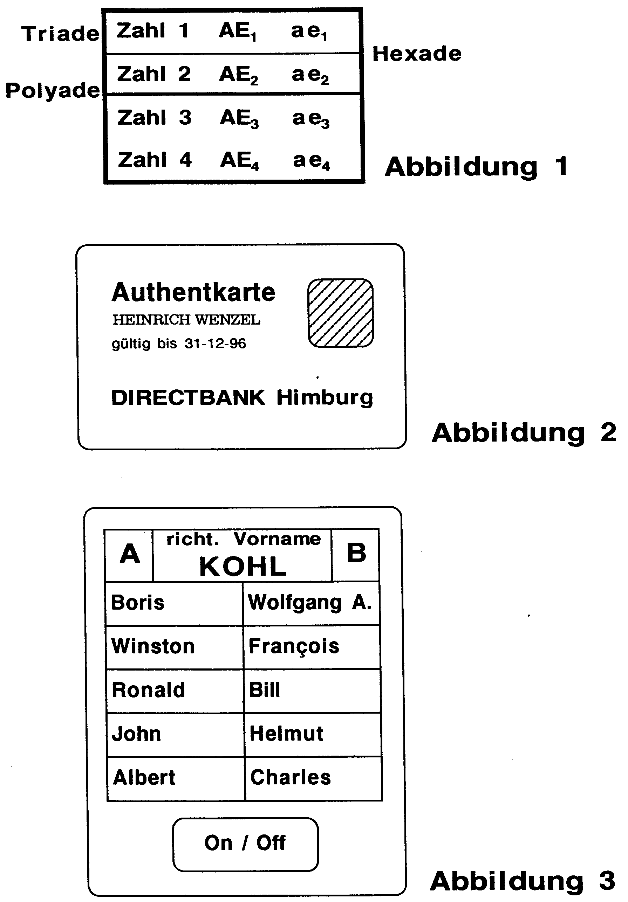

Es hat sich weiter als zweckmäßig erwiesen, derartige Triaden, Pentaden, Hexaden und ganz allgemein Polyaden (1) auf Informationsträgern IT zu speichern, um sie in dieser Form als Basis für psychometrische Authentverfahren zu verwenden. Das Speichern kann auf sogenannten Authentkarten oder ICC-Cards (Abbildung 2) oder in sogenannten Authentgeräten (Abbildung 3) erfolgen. Mit einem Authentgerät können Teileelemente der Polyaden sichtbar gemacht und bearbeitet werden. Die auf Authentkarten gespeicherten Polyaden werden mit Lesegeräten in Authentgeräte übertragen.

Aufgabe der Erfindung ist es, mit auf Informationsträgern gespeicherten Polyaden, deren Zahlen zur Bildung von Authentkriterien verwendet werden, nutzerfreundliche, einfache, sichere und vielfältig verwendbare Authentverfahren zu realisieren. Die Lösung dieser Aufgabe erfolgt durch die Vorkehrungen des Hauptanspruchs 1 mit den Ausgestaltungen der Unteransprüche 2 bis 10.

Mit Bezug auf die Abbildungen 1 bis 28 ist die Erfindung erläutert. Es bedeuten:

**Abbildung 1**: Polyaden;

**Abbildung 2**: Authentkarte;

**Abbildung 3**: ein Authentgerät mit einem Display, auf dem oben nacheinander Namen (Assoziationselemente AE) und darunter zehn Vornamen (Assoziationselemente ae) sichtbar werden; beim Authentieren assoziiert der Authentand jedem Namen den passenden Vornamen;

**Abbildung 4**: zehn Triaden AE-BZ-ae, deren AE und ae jeweils zusammengehören, nach Eingabe beim Initialisieren oder nach erfolgreicher Authentierung;

**Abbildung 5**: die Elementepaare BZ-ae der Abb.4 nach dem Mischen beim Initialisieren oder nach dem Mischen nach erfolgreicher Authentierung;

**Abbildung 6**: die Elementepaare BZ-ae der Abb.5 nach der Zuordnung zu den Elementen AE beim Authentieren;

**Abbildung 7**: zehn Triaden nach Eingabe der BZ in einfacher Reihenfolge, eines Teils der Elemente AE und ae in versetzter Reihenfolge und des Rests der Elemente AE und ae in nichtversetzter Reihenfolge beim Initialisieren;

**Abbildung 8**: die zehn Triaden der Abb.7 nach dem Mischen beim Initialisieren;

**Abbildung 9**: die zehn Triaden der Abb. 8 nach der Kettenbildung beim Authentieren;

**Abbildungen 10, 11 und 12**: zehn Triaden nach Eingabe der BZ in einfacher Reihenfolge sowie der Elemente AE und ae in versetzter Reihenfolge beim Initialisieren oder nach erfolgreicher Authentierung;

**Abbildung 13**: zehn Pentaden $AE_A$-$ae_A$-BZ-$AE_B$-$ae_B$, deren AE und ae jeweils zusammengehören, nach Eingabe beim Initialisieren oder nach erfolgreicher Authentierung;

**Abbildung 14**: die Elementepaare $ae_A$-BZ der Abb. 13 nach dem Mischen beim Initialisieren oder nach dem Mischen nach erfolgreicher Authentierung;

**Abbildung 15**: die Elementepaare $ae_A$-BZ der Abb. 14 nach der Zuordnung zu den Elementen $AE_A$ nebst Elementepaaren $AE_B$-$ae_B$ beim Authentieren;

**Abbildung 16**: die zehn Pentaden $AE_A$-$ae_A$-BZ-$AE_B$-$ae_B$ der Abb. 15 nach dem Vertauschen der Assoziationen AE-ae;

**Abbildung 17**: zwanzig Triaden AE-BZ-ae, von denen zehn Triaden "echt" und zehn Triaden "unecht" sind, nach dem Mischen beim Initialisieren; vor dem Mischen befanden sich die BZ in einfacher sowie die Elemente AE und ae in versetzter Anordnung;

**Abbildung 18**: die zehn "echten" Triaden der Abb. 17 nach Aussonderung der zehn "unechten" Triaden vor dem Authentieren;

**Abbildung 19**: zwanzig Triaden AE-BZ-ae, deren AE und ae jeweils zusammengehören, nach Eingabe beim Initialisieren oder nach erfolgreicher Authentierung;

**Abbildung 20**: zehn Triaden AE-BZ-ae nach Aussonderung aus den zwanzig Triaden AE-BZ-ae der Abb. 19, vor dem Mischen der Elemente BZ-ae beim Initialisieren oder vor dem Mischen nach erfolgreicher Authentierung;

**Abbildung 21**: zehn Triaden AE-BZ-ae, deren AE und ae jeweils zusammengehören, nach dem Authentieren;

**Abbildung 22**: die zehn Triaden der Abb. 21 nach dem Ersetzen der BZ;

**Abbildung 23**: zehn Triaden AE-BZ-ae, deren AE und ae versetzt sind, nach dem Authentieren;

**Abbildung 24**: die zehn Triaden der Abb. 23 nach dem Ersetzen der BZ sowie der Elemente AE und ae;

**Abbildung 25**: zehn Hexaden $AE_A$-$ae_A$-$BZ_A$-$BZ_B$-$AE_B$-$ae_B$, deren AE und ae versetzt sind, nach dem Authentieren; aus den $BZ_A$ wurde EZA und aus den $BZ_B$ wurde EZB errechnet;

**Abbildung 26**: die zehn Hexaden $AE_A$-$ae_A$-$BZ_A$-$BZ_B$-$AE_B$-$ae_B$ der Abb. 25 nach dem Mischen im Authentgerät des Authentanden A; letzterer authentiert sich durch Kettenbildung der $AE_A$ und $ae_A$: A-a-B-b-C-c usw. entsprechend den Ziffern 1, 2, 3 usw.;

**Abbildung 27**: die zehn Hexaden $AE_A$-$ae_A$-$BZ_A$-$BZ_B$-$AE_B$-$ae_B$ der Abb. 25 nach dem Mischen im Authentgerät des Authentanden B; letzterer authentiert sich durch Kettenbildung der $AE_B$ und $ae_B$: K-k-L-l-M-n usw. entsprechend den Ziffern 1, 2, 3 usw.;

**Abbildung 28**:

1 = Originaltext vor dem Vertauschen;

2 = Liste der Zeichenplätze vor dem Vertauschen und nach dem Vertauschen;

3 = Text nach dem Vertauschen;

4 = Zuordnungsliste der alphanumerischen Zeichen und der mit F(BZ) zu verschlüsselnden Zahlen;

5 = Werte der BZ, aus denen die Funktionen F(BZ) ermittelt werden;

6 = EZ und Menge der Verschlüsselungszahlen ZV.

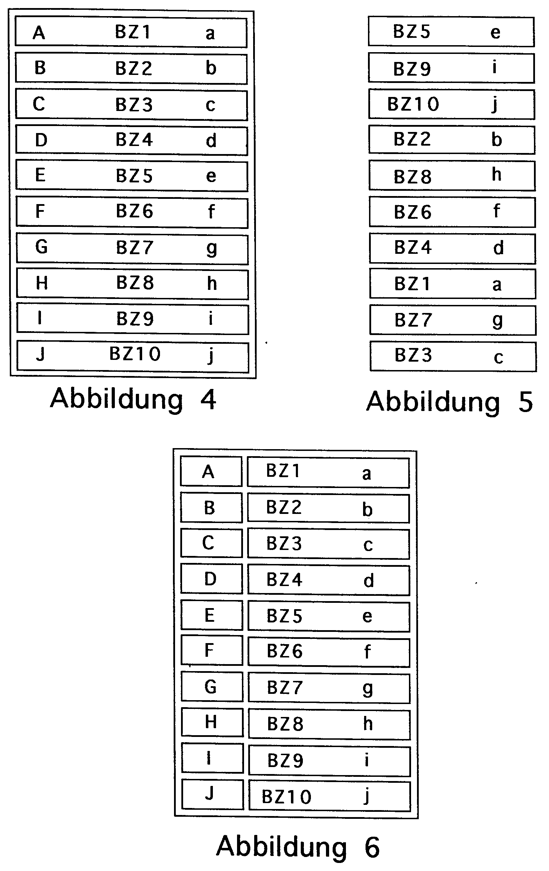

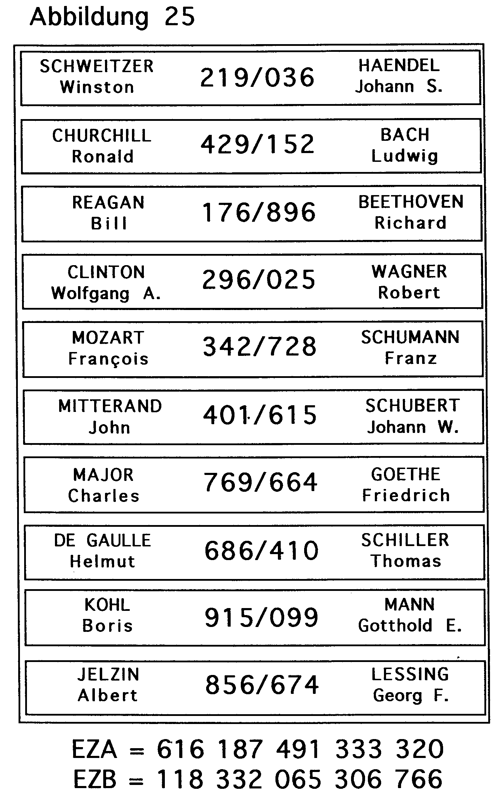

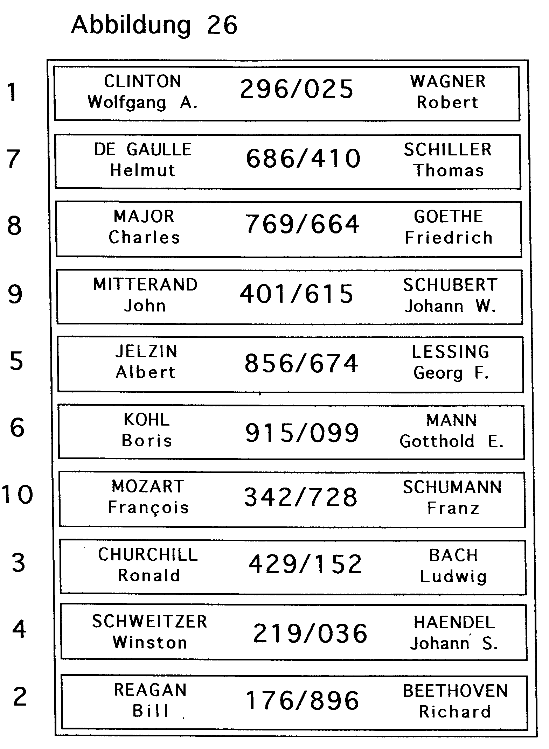

Das Prinzip des psychometrischen Authentverfahrens nach **Anspruch 1** geht aus den Abbildungen 4 bis 6 und 7 bis 9 hervor und ist anhand der Abbildungen 25 und 26 näher erläutert. Zur Vereinfachung sind in Abb. 25 und 26 nur die aus Namen, Vornamen und BZ bestehenden Triaden auf der linken Seite der Hexaden berücksichtigt. Zusammengehörende Namen und Vornamen befinden sich auf benachbarten (versetzten) Plätzen. Durch diese Anordnung wird erreicht, daß alle Namen und Vornamen in einer geschlossenen Kette enthalten sind. In dieser geordneten Anordnung der zehn dreistelligen Basiszahlen BZ (erster Initialisierungsschritt) errechnet sich mit dem Algorithmus:

$$Z_x = Round((BZ \cdot \text{vorherige BZ} \cdot \text{nachherige BZ})^2/1000;0);$$

$$EZ = \Sigma\, Z_x;$$

als Authentkriterium EZ zu 616 187 491 333 320.

In Abbildung 26 befinden sich die zehn BZ in anderer Reihenfolge (zweiter Initialisierungsschritt). Insgesamt gibt es etwa 3,6 Millionen verschiedener Reihenfolgen der zehn BZ und ebenso viele EZ. Die "willkürliche" Anordnung der BZ in Abbildung 26 kann man sich durch "Mischen" der "geordneten" BZ nach Abbildung 25 hergestellt denken.

In den Abbildungen 25 und 26 sind jeder BZ ein Name und ein Vorname von insgesamt zehn Personen beigeordnet. Im Prinzip handelt es sich bei diesen Personen um Bekannte des Authentanden. Zur Veranschaulichung sind im Beispiel die Namen und Vornamen allgemein bekannter Persönlichkeiten verwendet.

Die Authentierung besteht darin, daß der Authentand durch Assoziieren der zusammengehörenden Namen und Vornamen in der willkürlichen Triadenkette der Abbildung 26 die originale BZ-Kette der Abbildung 25 wieder herstellt. Mit entsprechender Software wird EZ neu errechnet und mit der gespeicherten originalen EZ verglichen. Der Authentierungsschritt nach Anspruch 1 ist durch die Ziffern 1 bis 10 in Abbildung 26 gekennzeichnet.

Die einzelnen Verfahrensschritte des Anspruchs 1 werden mit den Mitteln der modernen Computertechnik realisiert. Beim Authentieren wird beispielsweise im Authentgerät (3) in nicht vorhersehbarer Weise eine der zehn Triaden elektronisch aktiviert und der in dieser Triade abgespeicherte Name im Display sichtbar gemacht (im Beispiel "KOHL"). Der Authentand wählt den zugehörigen Vornamen "Helmut" aus, etwa durch Berühren des entsprechenden Feldes. Bei jeder Aktivierung teilt die Elektronik des Authentgeräts der betreffenden Triade automatisch eine Platzierungsnummer zu.

Nach der Aktivierung und Bestätigung der Triade mit dem Vornamen "Helmut" erscheint im Display ein neuer Name, und zwar der, welcher sich auf eben dieser Triade befindet (im Beispiel "DE GAULLE"). Der zu diesem Namen gehörende Vorname wird als nächstes ausgewählt und bestätigt usw. Nach Wahl aller zehn Vornamen haben alle zehn Triaden eine Platzierungsnummer erhalten. Die Elektronik des Authentgeräts ordnet danach die Triaden entsprechend ihrer Platzierungsnummer und bildet in dieser Weise die BZ-Kette. Für eine Authentierung bedarf es eines neunmaligen Auswahlvorgangs. Deshalb ist die Sicherheit einer solchen Authentierung 9! = 363 880.

Nach dem Prinzip des psychometrischen Authentverfahrens entsprechend Anspruch 1 verwendet man beispielsweise zehn Polyaden des Typs AE-ae-(Z1, Z2, Z3), wobei Z2 = (Z1+K) und Z3 = (Z1+DZ) ist, Z1 in jeder der zehn Polyaden einen anderen Wert hat, K eine Konstante ist und DZ bei aufeinander folgenden Authentierungen jeweils einen anderen Wert hat, der für alle zehn Polyaden während jeder Authentierung identisch ist. Man erhält bei der Authentierung x folgende Werte der Zahlengruppe (Z1, Z2, Z3):

"468, (468+19), (468+752)", "186, (186+19), (186+752)", "802, (802+19), (802+752)", "473, (473+19), (473+752)", "157, (157+19), (157+752)", "136, (136+19), (136+752)", "767, (767+19), (767+752)", "183, (183+19), (183+752)", "490, (490+19), (490+752)", "575, (575+19), (575+752)".

Und bei der Authentierung x+1:

"468, (468+19), (468+555)", "186, (186+19), (186+555)", "802, (802+19), (802+555)", "473, (473+19), (473+555)", "157, (157+19), (157+555)", "136, (136+19), (136+555)", "767, (767+19), (767+555)", "183, (183+19), (183+555)", "490, (490+19), (490+555)", "575, (575+19), (575+555)".

Bei der Authentierung x und mit dem Algorithmus:

$$E1 = \Sigma\, N_x \text{ bei } N_x = \text{Round}((Z1_x \cdot Z1_{x+1} \cdot Z1_{x+2})^2/100;0);$$

errechnet sich: E1 = 414 147 184 393 665.

Mit dem Algorithmus:

$$E2 = \Sigma\, N_x \text{ bei } N_x = \text{Round}((Z2_x \cdot Z2_{x+1} \cdot Z2_{x+2})^2/100000;0);$$

errechnet sich: E2 = 553 328 039 033.

Mit dem Algorithmus:

$$E3 = \Sigma\, N_x \text{ bei } N_x = \text{Round}((Z3_x \cdot Z3_{x+1} \cdot Z3_{x+2})^2/1000000;0);$$

errechnet sich: E3 = 25 252 350 924 391.

Der Ergebniswert E1 = 414 147 184 393 665 kann im Authentgerät gespeichert und als Authentkriterium verwendet werden. Eine Authentzahl AZ = 752-391 läßt sich bilden aus Z3 (DZ = 752) und den letzten drei Ziffern aus E3, nämlich 391. Für verschiedene Authentierungen ist AZ eine Funktion von DZ.

Abbildung 4 zeigt entsprechend **Anspruch 2** zehn Triaden A-BZ1-a, B-BZ2-b usw., deren AE und ae also jeweils zusammengehören. Aus den BZ in dieser Anordnung wird EZ errechnet. In Abbildung 5 sind die Elementepaare BZ-ae der Abb.4 nach dem Mischen zu sehen und in Abbildung 6 nach der Zuordnung zu den Elementen AE beim Authentieren. Aus den BZ in dieser Anordnung wird EZ als Authentkriterium erneut errechnet. Zur Vorbereitung der nächsten Authentierung werden die in den Abbildungen 5 und 6 dargestellten Prozeßschritte wiederholt. Ein Vorteil dieses Verfahrens liegt darin, daß bei gleicher Zahl von gespeicherten und durch das Authentieren rekonstruierten Assoziationen eine etwas größere Sicherheit gegenüber dem Verfahren nach Anspruch 3 erreicht wird: Beispielsweise bei zehn gespeicherten und durch das Authentieren rekonstruierten Assoziationen eine Sicherheit von 10! gegenüber 9!.

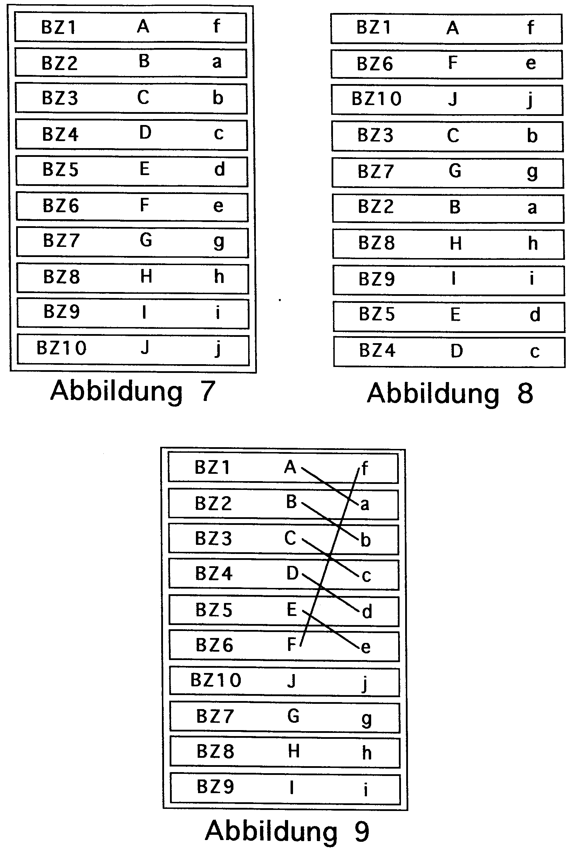

Abbildung 7 zeigt zeigt entsprechend **Anspruch 3** zehn Triaden BZ1-A-f, BZ2-B-a usw., bei denen die Assoziationen der ersten sechs Triaden versetzt sind. Diese Anordnung bewirkt, daß alle in Aussicht genommenen Triaden, und nur diese, beim Authentieren berücksichtigt werden, was keineswegs selbstverständlich ist. Aus BZ1 bis BZ6 wird EZ errechnet. Danach werden alle Triaden außer der ersten gemischt (Abbildung 8).Der Authentand bringt durch Assoziation von A mit a, B mit b, C mit c, D mit d, E mit e und F mit f die in Abbildung 9 gezeigte Kette A-a-B-b-C-c-D-d-E-e-F-f zustande. Aus den ersten sechs BZ wird EZ als Authentkriterium neu errechnet. Die restlichen vier Triaden bleiben unberücksichtigt.

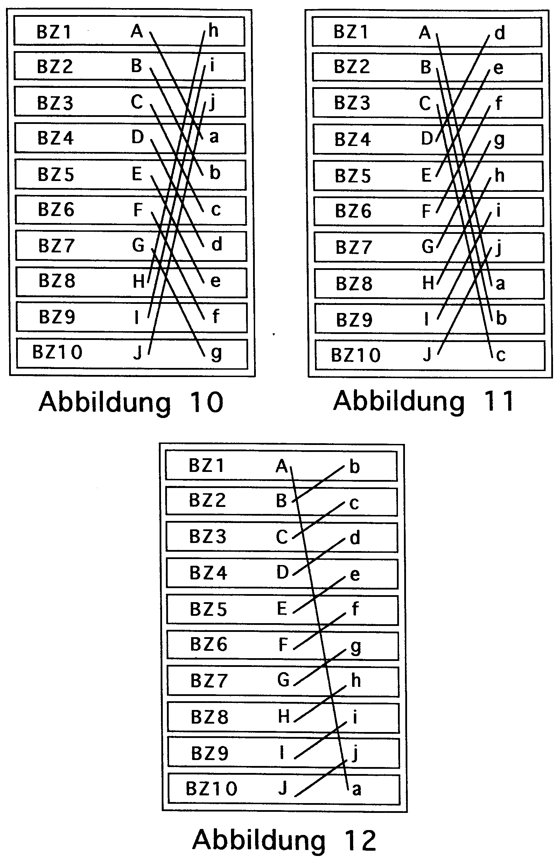

Mit den in den Patentansprüchen 2 und 3 beschriebenen Vorkehrungen, nämlich beim Authentieren nur einer Teilmenge der AE das zugehörige ae zuzuordnen bzw. nur einen Teil der AE und ae versetzt anzuordnen, wird die Zahl der Auswahlvorgänge reduziert. Da die letzten Auswahlvorgänge nur noch wenig zur Erhöhung der Sicherheit beitragen, ist es vorteilhaft, sie bei der Authentierung wegzulassen, das heißt, sich auf die ersten Auswahlvorgänge zu beschränken. Aus den Abbildungen 7 bis 12 geht dies Prinzip hervor. Wenn nach den Abbildungen 10 bis 12 beispielsweise zehn AE (Namen) jeweils das richtige ae (Vorname) beizuordnen ist, bedarf es für eine Authentierung eines neunmaligen Auswahlvorgangs. Die Sicherheit einer solchen Authentierung ist deshalb 9! = 363 880. Begnügt man sich mit sechs Auswahlvorgängen anstelle von 9, so erhält man eine Sicherheit von immerhin noch 9*8*7*6*5*4 = 60480, während man mit vier Auswahlvorgängen eine Sicherheit von 9*8*7*6 = 3024 bekommt. Im Falle eines Authentverfahrens mit den Namen und Vornamen von zwölf Personen, von denen sechs ausgewählt werden, errechnet sich die Sicherheit zu 11*10*9*8*7*6 = 332 640.

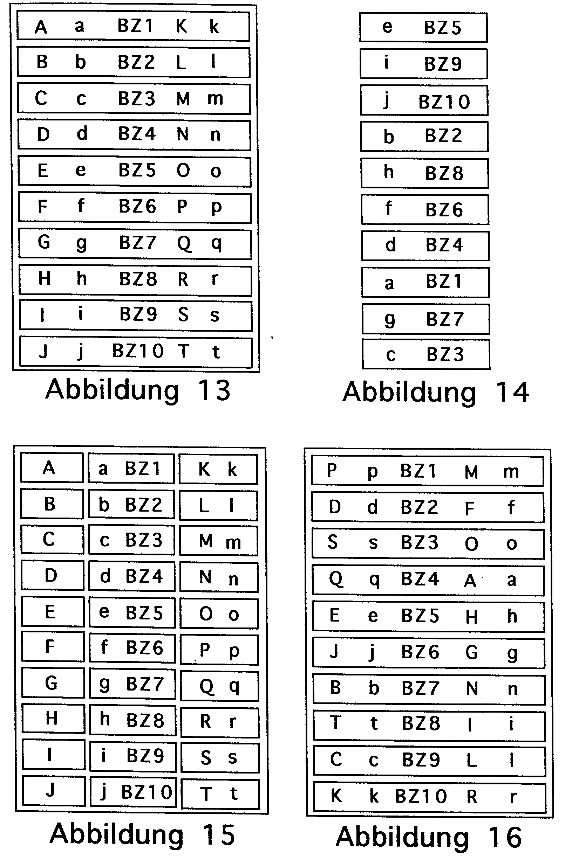

Nach **Anspruch (4)a** enthält jede Polyade (1) im geordneten Zustand mehrere Paare AE-ae von zusammengehörigen (Abbildung 13) oder versetzten (Abbildung 25) Assoziationselementen, von denen je nur ein Paar für die Authentierung verwendet wird (Abbildungen 14 und 15). In Abbildung 13 sind nach Eingabe beim Initialisieren oder nach erfolgreicher Authentierung zehn Pentaden $AE_A$-$ae_A$-BZ-$AE_B$-$ae_B$ zu sehen, deren AE und ae jeweils zusammengehören. Die Elementepaare $ae_A$-BZ werden gemischt (Abbildung 14) und beim Authentieren vom Authanden den Elementen $AE_A$ zugeordnet. Dabei blieben die Assoziationen $AE_B$-$ae_B$, das heißt K-k, L-l usw. unverändert. Die zehn Pentaden können in einer Authentkarte oder direkt in einem Authentgerät gespeichert sein.

Wird eine Authentkarte verwendet, so wird diese mit einem nicht dargestellten Initialisiergerät "geladen". Das heißt, der Karteninhaber gibt die von ihm zum Zwecke der Authentierung ausgesuchten Assoziationen AE-ae, z. B. Namen und Vornamen sowie eventuell seine persönlichen Koordinaten in das Initialisiergerät ein. Letzteres erzeugt die erforderlichen BZ und errechnet aus diesen die EZ. Schließlich bildet das Initialisiergerät automatisch die Pentaden und überträgt sie auf die Authentkarte.

Mit der "geladenen" Authentkarte wird das Authentgerät initialisiert. Hierzu wird die Authentkarte in das Authentgerät eingelegt, worauf die Pentaden und die EZ automatisch in das Authentgerät eingelesen werden. Nach erfolgter Initialisierung ist das Authentgerät für eine weitere Initialisierung ohne vorhergehende erfolgreiche Authentierung gesperrt. Der Authentvorgang besteht darin, daß im Display des Authentgeräts gleichzeitig zehn Vornamen und nacheinander in bunter Reihenfolge die assoziierten zehn Namen erscheinen und der Karteninhaber zu jedem Namen den richtigen Vornamen auswählt. Nach erfolgreicher Authentierung, wenn also allen Vornamen die richtigen Namen zugeordnet wurden und die als Authentkriterium verwendete Ergebniszahl EZ errechnet wurde, gibt das Authentgerät bestimmte auf den Zweck der Authentierung abgestimmte Funktionen frei. Beispielsweise wird ein Signal gesendet, mittels eines in eine Anlagen-Elektronik integrierten Authentprozessors werden Aktivierungs- oder Deaktivierungsimpulse freigesetzt, oder es wird eine "variable" Authentzahl gebildet, die mit einer numerischen Tastatur in das Programm einer Kontrollzentrale eingegeben werden kann. Nach erfolgreicher Authentierung kann der Karteninhaber mit Hilfe des Authentgeräts in seiner Authentkarte die jeder BZ zugeordneten Namen und Vornamen vertauschen oder sein Authentgerät mit einer anderen Authentkarte initialisieren. Die Tasten "A" und "B" in Abbildung 3 dienen zur Führung des Authentprozesses nach im Display erscheinenden Menu-Anweisungen.

Das Verfahren nach Anspruch (4)a vergrößert die Sicherheit auf folgende Weise: Jede der zehn Pentaden besteht aus einer BZ und zwei Assoziationen. Aus den insgesamt zwanzig vorhandenen Vornamen wählt das Geräteprogramm bei jedem Authentvorgang zehn beliebige Vornamen aus und macht sie auf dem Display des Authentgeräts sichtbar, während die zehn zugehörigen Namen nacheinander angezeigt werden. Die Gesamtzahl aller möglichen Kombinationen von zehn Vornamen aus einer Menge von zwanzig beträgt 20!/10! = 670 442 572 800, gegenüber 3 628 800 Kombinationen im Fall von Triaden mit einem Paar Namen und Vornamen. Das Verhältnis der Gesamtzahl aller möglichen Vornamen-Kombinationen ist also 184 756-mal so groß. Dies Verhältnis ist ein Maß für die Vergrößerung der Sicherheit gegen Erraten oder Ausprobieren der richtigen Verknüpfungsreihenfolge.

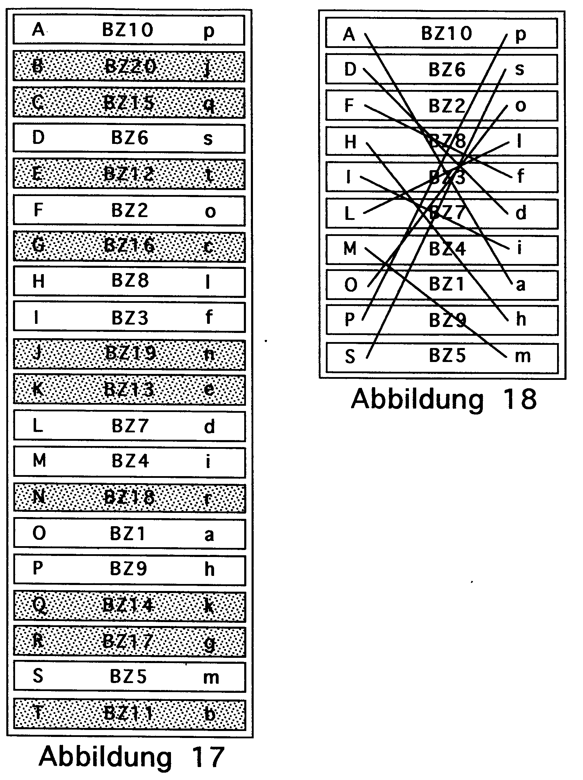

Nach **Anspruch (4)b** gehören die Begriffsassoziationen AE-ae zu zwei nur vom Authentanden unterscheidbaren Kategorien (Abbildung 17), von denen nur die Assoziationen der einen Kategorie zum Authentieren verwendet wird (Abbildung 18). In Abbildung 17 sind zwanzig gemischte Triaden AE-BZ-ae zu sehen, deren AE und ae, z. B. Namen und Vornamen, jeweils versetzt sind. Die nur vom Authentanden unterscheidbaren zwei Begriffskategorien sind zum Beispiel dadurch definiert, daß die Namen und Vornamen von zehn dem Authentanden bekannten Personen die erste Kategorie bilden und zehn Namen und zehn Vornamen, die der Authentand keiner reellen Person zuordnen kann, die zweite Kategorie ausmachen. Die Namen und Vornamen der ersten Kategorie sind auf zehn der zwanzig Triaden verteilt ("echte" Triaden). Die Namen und Vornamen der zweiten Kategorie sind auf die restlichen zehn Triaden verteilt ("unechte" Triaden). Die zwanzig Triaden können in einer Authentkarte oder direkt in einem Authentgerät gespeichert sein.

Wird eine Authentkarte verwendet, so wird diese mit einem nicht dargestellten Initialisiergerät "geladen". Von den insgesamt zwanzig Triaden eliminiert der Authentand mit seinem Authentgerät bei dessen Initialisierung die zehn "unechten" Triaden. Zu diesem Zweck erscheinen sämtliche Namen oder Namen-Vornamen-Paare auf dem Gerätedisplay. Nur der Authentand kann nach dem psychometrischen Prinzip die "echten" von den "unechten" Triaden unterscheiden. Es bleiben also die zehn "echten" Triaden für die eigentlichen Authentvorgänge übrig. Bei diesen bildet der Authentand die Assoziationenkette A-a-O-o-F-f usw. (Abbildung 18).

EP 0 763 802 A2

Die Gesamtzahl aller möglichen Kombinationen von zehn BZ aus den zwanzig auf der Authentkarte verzeichneten BZ beträgt 670 442 572 800, gegenüber 3 628 800 Kombinationen, wenn nur zehn Triaden mit insgesamt zehn BZ registriert sind. Die Hinzufügung der zehn "unechten" Triaden auf der Authentkarte erfordert somit einen um den Faktor 184 756 vergrößerten Aufwand zum Erraten oder Ausprobieren der richtigen Reihenfolge der zehn BZ, welche zur Errechnung von EZ verwendet wurde. Entsprechend erhöht sich die Sicherheit der Authentkarte. Der Aufwand für das Authentgerät und seine Initialisierung ist dabei nur unwesentlich größer.

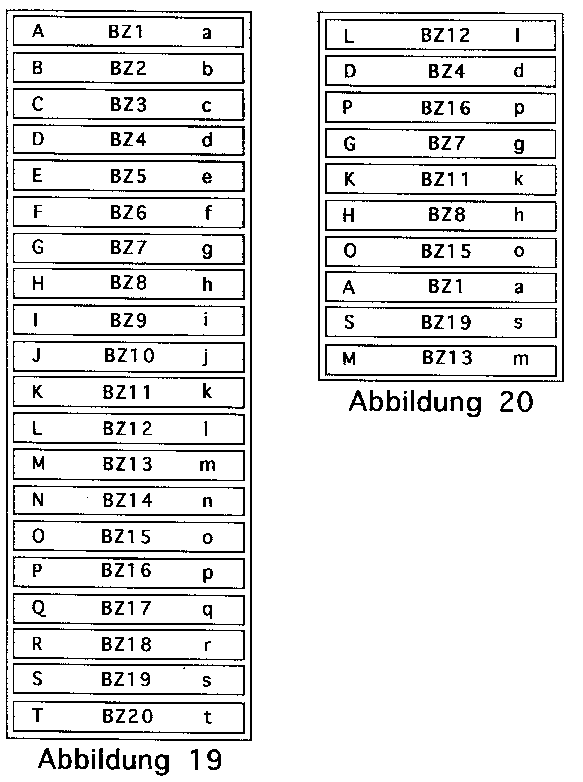

Nach **Anspruch (4)c** wird aus der Gesamtmenge der Polyaden für das Authentieren nur eine Teilmenge verwendet (Abbildungen 19 und 20). In Abbildung 19 sind zwanzig geordnete Triaden AE-BZ-ae zu sehen, deren AE und ae, z. B. Namen und Vornamen, zusammengehören. Während des Initialisierens werden diese zwanzig Namen-Vornamen-Paare elektronisch gemischt. Dabei gibt es 19! - also praktisch unendlich viel - Möglichkeiten, diese zwanzig Assoziationen neu zu ordnen. Dann werden je zehn Triaden, beispielsweise L-BZ12-l, D-BZ4-d, P-BZ16-p usw. (Abbildung 20) willkürlich ausgesondert und als Basis für einen Authentvorgang, etwa nach den Abbildungen 4 bis 6, verwendet.

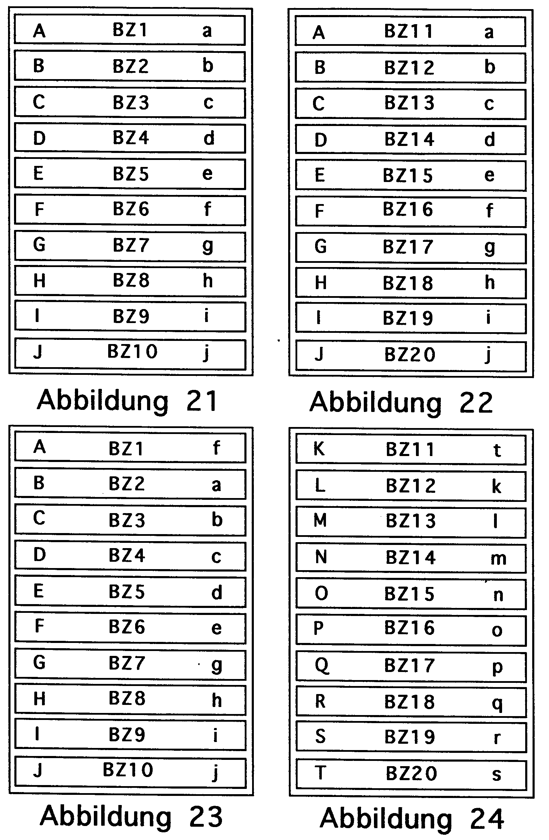

Nach **Anspruch (4)d** werden nach dem Authentieren die Assoziationen AE-ae vertauscht (Abbildung 16) oder ersetzt (Abbildungen 23 und 24) und/oder die Zeichen $BZ_{alt}$ teilweise oder insgesamt durch andere Zeichen $BZ_{neu}$ (Abbildungen 21, 22 und 23, 24) ersetzt. Das Vertauschen oder Ersetzen der Assoziationen bezweckt, für die folgenden Authierungen umgestellte bzw. andere Assoziationen heranzuziehen. Das Ersetzen der BZ dient unter anderem dazu, bei jedem Authentvorgang neue Ergebniszahlen EZ oder Authentzahlen AZ zu generieren.

Nach **Anspruch (4)e** werden nach dem Authentieren aus den BZ oder EZ charakteristische Authentzahlen AZ erzeugt, die so beschaffen sind, daß lediglich abgeleitete Teildaten übertragen werden und weder der komplette BZ-Satz, noch seine Struktur, noch die originale EZ für einen eventuellen Emulator bei der Übertragung erkennbar sind.

Nach **Anspruch (4)f** sind die EZ Zahlen mit sehr vielen Ziffern, von denen bei der Bildung der AZ nur sehr wenige verwendet werden.

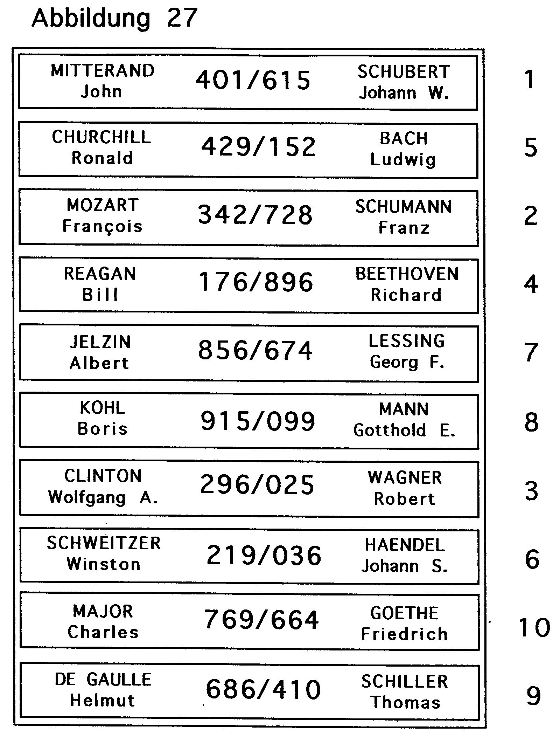

Aus den Abbildungen 25 bis 27 geht das Verfahren zur gegenseitigen psychometrischen Authentierung zweier Authentanden A und B nach **Anspruch 5** hervor. Bei der Initialisierung werden <u>zwei</u> BZ-Ketten erzeugt, von denen die eine dem Authentanden A und die andere dem Authentanden B zugeteilt werden. Authentand A bildet mit seiner BZ-Kette (219-429-176-296-342-401-769-684-915-856) und seinen spezifischen Namen und Vornamen seine persönliche Triadenkette, Authentand B tut Entsprechendes mit der zweiten BZ-Kette (036-152-896-025-728-615-664-410-099-674). Das System errechnet zu Beginn der Initialisierung die Ergebniszahlen EZA = 616 187 491 333 320 und EZB = 118 332 065 306 766. Die Gegenauthentierung, bestehend aus zwei Selbst- und zwei Kontrollauthentierungen, verläuft beispielsweise wie folgt, wenn das Gesamtsystem aus zwei miteinander vernetzten PC und entsprechender Software besteht:

* Authentand A erzeugt in einem ersten Initialisierungs-Schritt mit seiner Software zehn $BZ_A$ und zehn $EZ_B$. Authentand B erhält die so teilinitialisierte Software.

* Beide Authentanden vollenden in einem zweiten Schritt die Initialisierung ihrer jeweiligen Software mit ihrem PC, indem sie ihre personenspezifischen Namen und Vornamen eingeben.

* Zum Zwecke der Gegenauthentierung werden die beiden PC vernetzt. Bei jedem Gegenauthentvorgang verknüpfen die Authentanden A und B zunächst ihre jeweiligen Namen und Vornamen, wodurch in beiden PC die $BZ_A$ und $BZ_B$ in die richtige Reihenfolge gebracht werden. Im $PC_A$ wird EZA errechnet und verglichen (Selbstauthentierung des Authentanden A), im $PC_B$ wird EZB errechnet und verglichen (Selbstauthentierung des Authentanden B).

* Über die Beziehungen $BZA_{neu} = BZA_{alt} + DZ_A$ und $BZB_{neu} = BZB_{alt} + DZ_B$ werden in beiden PC zehn neue $BZ_A$ und $BZ_B$ sowie eine neue EZA und eine neue EZB errechnet. Hierbei sind die Differenzzahlen $DZ_A$ und $DZ_B$ zweckmäßigerweise von der Software im $PC_A$ bzw. $PC_B$ nach dem Zufallsprinzip erzeugte Zahlen.

* Dann werden $DZ_A$ und $EZA_{neu}$ vom $PC_A$ an den $PC_B$ übermittelt; $PC_B$ berechnet über $BZA_{neu} = BZA_{alt} + DZ_A$ zehn neue $BZ_A$ und eine neue EZA, welche mit der übermittelten $EZA_{neu}$ verglichen wird (Kontrollauthentierung durch Authentand B).

* Danach werden vom $PC_B$ $DZ_B$ und $EZB_{neu}$ an den $PC_A$ übermittelt; $PC_A$ berechnet über $BZB_{neu} = BZB_{alt} + DZ_B$ zehn neue $BZ_B$ und eine neue EZB, welche mit der übermittelten $EZB_{neu}$ verglichen wird (Kontrollauthentierung durch Authentand A).

* Nach erfolgreichen Selbst- und Kontrollauthentierungen ist die erfindungsgemäße Gegenauthentierung - bis auf die Mischung der Hexaden - abgeschlossen. Aus den neuen BZ oder $EZA_{neu}$ und $EZB_{neu}$ kann eine kombinierte Authentzahl (Signatur) errechnet werden, mit welcher Informationen gekennzeichnet werden, die zwischen $PC_A$ und $PC_B$ auszutauschen sind.

* Die in den beiden PC nach der Gegenauthentierung vorhandenen je zehn neuen $BZA_{neu}$ und $BZB_{neu}$ können an Stelle der $BZA_{alt}$ und $BZB_{alt}$ als kennzeichnende BZ-Ketten zusammen mit $EZA_{neu}$ im $PC_A$ und $EZB_{neu}$ im $PC_B$ für die nächste Gegenauthentierung gespeichert werden. Dies erhöht die Sicherheit des Verfahrens, weil bei jeder Gegenauthentierung andere EZ zwischen den beiden PC ausgetauscht werden.

* Des weiteren können die beiden Authentanden nach erfolgreicher Authentierung und vor dem Mischen der Hexaden ihre personenspezifischen Namen und Vornamen insgesamt oder teilweise ändern.

Die Gegenauthentierung läßt sich in der Kommunikation einsetzen, wenn es darauf ankommt, die Authentizität von Sender und Empfänger sicherzustellen. Beispiele hierfür sind der elektronische Rechtsverkehr und die gesicherte Übermittlung von verschlüsselten oder unverschlüsselten Informationen.

Mit den Vorkehrungen nach **Anspruch 6** ist es möglich, in einer Zentrale eine Kontrollrechnung der von einem oder vielen Authentanden übermittelten Ergebniszahlen EZ oder Authentzahlen AZ durchzuführen. Im Analysegerät, welche die von einem bestimmten Authentanden übermittelten Authentzahlen auf Echtheit überprüft, könnten beispielsweise die zehn Zahlen Z1 des Beispiels auf Seite 6 in der Reihenfolge 468-186-802-473-157-136-767-183-490-575 hinterlegt sein.

Da Ergebniszahlen EZ meistens sehr viele Stellen haben, wie z.B. 25 252 350 924 **391**, ist es unzweckmäßig, derartig große Zahlen telefonisch zu übermitteln. Vorteilhafter ist es, anstelle aller Ziffern nur eine kleine, stellenmäßig definierte Menge von Ziffern als Bestandteil variabler Authentzahlen AZ zu übermitteln, beispielsweise die oben herausgehobenen Ziffern **391**. Mit der Authentzahl 752-391, die als ersten Bestandteil den Wert DZ = 752 enthält, errechnet das Analysegerät mit Z3 = Z1+752 und dem Algorithmus:

$$E3 = \Sigma\ N_x \text{ bei } N_x = Round((Z3_x \cdot Z3_{x+1} \cdot Z3_{x+2})^2 / 1000000; 0);$$

E3 = 25 252 350 924 **391**.

Das Analysegerät vergleicht dann die letzten drei Ziffern der errechneten E3 mit den letzten drei Ziffern der empfangenen Authentzahl AZ und stellt Übereinstimmung fest. Die übermittelte Authentzahl ist also echt, und der Authentand ist ebenfalls echt.

AZ ist so beschaffen, daß weder der komplette BZ-Satz, noch seine Struktur, noch die originale EZ für einen eventuellen Emulator bei der Übertragung erkennbar sind. Es werden lediglich einzelne abgeleitete Teildaten übertragen.

Nach **Anspruch 7** gibt der Authentand eine bei jeder Authentierung unterschiedliche Authentzahl AZ an eine Zentrale durch, die abhängig ist von den BZ-Änderungen und von $EZ_{neu}$. Eine derartige "variable" Authentzahl läßt sich an Stelle der bisher üblichen unveränderlichen Paßwörter, Codes, PINs und TANs als Authentmerkmal einsetzen.

Die Änderung der BZ kann im Authentgerät per Zufall oder unter Verwendung geeigneter Algorithmen bewirkt werden. Beispielsweise kann man die BZ mit Differenzzahlen DZ verändern, etwa nach der Beziehung:

$$BZ_{neu} = BZ_{alt} + DZ$$

AZ ist dann, wie bereits erwähnt, aus DZ und einigen Bestandteilen von $EZ_{neu}$ zusammengesetzt.

Aus Sicherheitsgründen muß das Analysegerät der Zentrale Werte von AZ zurückweisen, die schon einmal verwendet wurden. Dies kann mit einer Sperre bewirkt werden, wie sie bei den TAN-Werten des Telebanking üblich ist. Vorteilhafterweise sollte das Authentgerät derartige doppelte AZ erst gar nicht erzeugen. Verwendet man zur Erzeugung der DZ den Algorithmus:

$$DZ_{n+1} = Mod((DZ_n + z_1); 10^{z2})$$
$$= Mod((n+1)z_1; 10^{z2}),$$

bei dem

- $z_1$ eine mit 9 endende ganze Zahl,
- $z_2$ eine positive ganze Zahl,
- der Index n die n-te Authentierung bedeuten,

so bilden die errechneten $DZ_n$ eine Zahlenfolge, in der alle Zahlen bis zum größten Wert für $DZ_n$ genau einmal vorkommen.

Definiert man also AZ als einen Wert, in dem n oder eine Funktion von n sowie Bestandteile von "$EZ_{neu}$ = Funktion von DZ" enthalten sind, so wird die Sperre des Analysegeräts gegen erneute Verwendung von bereits benutzten AZ besonders einfach. Es genügt, alle AZ zurückzuweisen, deren n kleiner ist als das n der zuletzt empfangenen AZ. Dies ist vom Umfang der Software her äußerst ökonomisch, im Gegensatz zu dem bekannten Sperrverfahren bei TANs, bei denen für jeden Authentanden hunderte von vielstelligen Zahlen als Sperre gespeichert werden müssen.

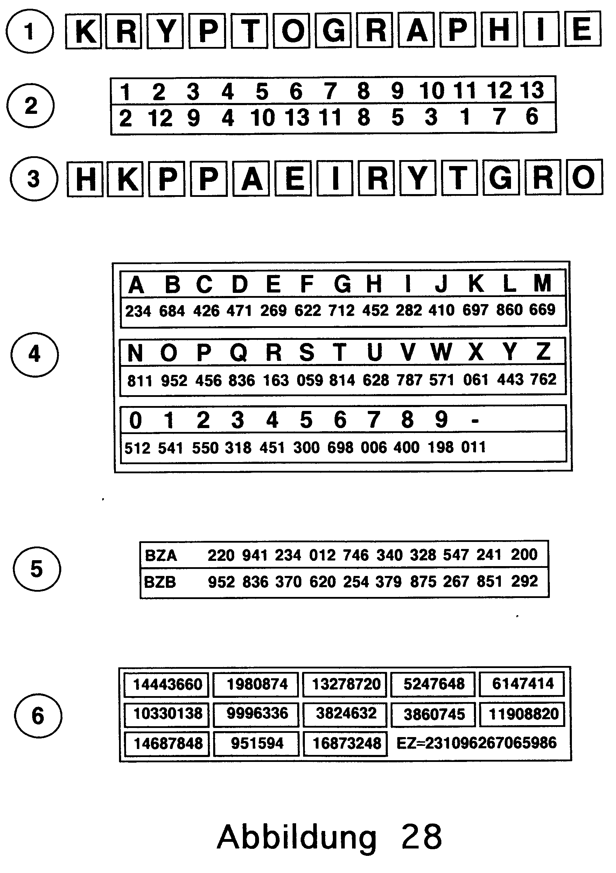

Das Verschlüsselungsverfahren nach den **Ansprüchen 7 bis 10** läuft im einzelnen wie folgt ab (Abbildung 28): Nach jedem Authentvorgang, beispielsweise entsprechend dem in Anspruch 5 definierten Gegenauthentverfahren, befinden sich die BZ in der geordneter Folge (Ziffer 5). Dabei weist jeder Authentvorgang neue BZ-Werte auf, wenn bei der vorhergehendenden Authentierung der BZ-Satz ausgetauscht wurde. Mit Hilfe von Funktionen F(BZ), beispielsweise der Beziehung:

$N_n =$       $Mod((BZA_n + A + B); 10^3);$
$A =$       Stelle (Platznummer) eines Zeichens im Originaltext;
$B =$       Stelle (Platznummer) eines Zeichens im Text mit vertauschten Zeichen;
$F(BZ) =$       Summe aller $N_n$ für n = 1 bis n = 7;

sowie der Zahlen Z aus der Transskriptionsliste (Ziffer 4) und der Werte A und B (Ziffer 2) wird für jedes Schriftzeichen des Originaltextes (Ziffer 1) eine Verschlüsselungszahl ZV berechnet, beispielsweise nach der Formel:

$$ZV = Z * A * F(BZ);$$

Alle ZV (Ziffer 6) werden vom Authentanden A (Sender) einem Authentanden B (Empfänger) übermittelt, welcher mit nur beiden Authentanden zugänglichen den Listen (Ziffern 4 und 2), seinen BZA und BZB sowie F(BZ), aus den erhaltenen ZV den Originaltext rekonstruiert.

Zusätzlich wird beim Authentanden A aus allen Z eine Ergebniszahl EZ errechnet, die ebenfalls dem Authentanden B übermittelt wird. Bei letzterem wird aus seinen Z eine neue EZ berechnet. Die Übereinstimmung beider EZ beweist eine vollständige und ungeänderte Textübermittlung (Integritätskontrolle). Beispielsweise errechnet sich mit folgenden Formeln:

$Zn = Round((Zvor * Z * Znach)^2 / 10^3; 0);$
Zvor = Z auf dem Platz vor Z im Text;
Znach = Z auf dem Platz nach Z im Text;
EZ = Summe aller Zn

EZ = 231.096.267.065.986.

Die Sicherheit des Verschlüsselungsverfahrens mit den Funktionen F(BZ) ist sehr groß: Allein durch die Umstellungsliste (Ziffer 2) wird bei einem Text von beispielsweise 100 Zeichen ein Sicherheitsfaktor von 100! erreicht. Die Transskriptionsliste (Ziffer 4) gibt eine zusätzliche enorme Sicherheit. Schließlich gewährleisten die Funktionen F(BZ), daß selbst bei unberechtigter Kenntnis der Listen (Ziffern 2 und 4) eine Fremdentschlüsselung des übermittelten Textes unmöglich ist.

Im folgenden sind verschiedene Anwendungen des erfindungsgemäßen Authentverfahrens aufgezählt:

A) Authentgerät nach Abbildung 3, das nach erfolgreichem Authentieren ein Signal erzeugt:

Betrieb von Fahrzeugen und Anlagen: Das Signal aktiviert oder deaktiviert die Bord- bzw. Anlagen-Elektronik;
Betätigen von Toren: Das Signal steuert die Torantriebselektronik;
Pay TV, Telefon: Das Signal gibt den Zugang zum TV oder Netz frei;
Personenkontrolle: Das ausgesendete Signal dient als Nachweis für positive Authentierung.

B) Fest eingebautes Authentgerät nach Abbildung 3:

Betrieb von Fahrzeugen und Anlagen: Nach positiver Authentierung setzt der in die Bord- bzw. Anlagen-Elektronik integrierte Authentprozessor Aktivierungs- oder Deaktivierungsimpulse frei;
Telebanking, Points of Sale: Zugang zum System nur nach positiver Authentierung;
Zugangskontrolle für Sicherheitsbereiche und Tresore: Positive Authentierung ist Voraussetzung für den Zugang.

C) Authentgerät nach Abbildung 3, das nach erfolgreichem Authentieren eine "variable" Authentzahl anzeigt, welche zur Überprüfung mit numerischer Tastatur in eine Kontrollstation (Terminal) eingegeben wird:

Zugangskontrolle, Telebanking, Points of Sale: Eingabe der mit dem Taschenauthentgerät erzeugten "variablen" Authentzahl anstelle der bisher üblichen unveränderlichen PIN.

D) Authentprogramm nach den Ansprüchen 5 und 8 bis 10 für zwei PC zur gegenseitigen Authentierung:

<u>Nachrichtenübermittlung in der Rechtsinformatik</u>: Durch elektronische Signatur kann die Authentizität und Integralität von elektronisch übermittelten Nachrichten gewährleistet werden;

<u>Verschlüsselung von Nachrichten</u>: Codieren und Decodieren.

E) Authentkarte nach Abbildung 2:

<u>In Verbindung mit Authentgeräten</u> geeignet für alle unter A) bis D) aufgezählten Anwendungen.

**Patentansprüche**

1. Verfahren zur psychometrischen Authentierung mit auf Informationsträgern IT gespeicherten Polyaden (1) bestehend aus Elementen AE, wie A, B, A1, A2 usw. und Elementen ae, wie a, b, a1, a2 usw., von personenspezifischen Begriffsassoziationen AE-ae, wie A-a, B-b, A1-a1, A2-a2 usw., und Zeichen oder Zahlen BZ, bei dem aus den BZ ein oder mehrere Authentkriterien gebildet werden, dadurch gekennzeichnet, daß:

   <u>beim Initialisieren</u> Assoziationselemente und BZ <u>zunächst</u> in eine regelmäßige Anordnung, in welcher aus den BZ das oder die Authentkriterien gebildet werden, <u>danach</u> Assoziationselemente in Verbindung mit je einem oder mehreren BZ in eine willkürliche unregelmäßige Anordnung gebracht und in dieser gespeichert werden;
   <u>beim Authentieren</u> der Authentand durch Assoziieren der in unregelmäßiger Anordnung befindlichen Assoziationselemente die ursprüngliche regelmäßige Anordnung der BZ rekonstruiert, in welcher aus den BZ das oder die Authentkriterien erneut gebildet werden.

2. Verfahren nach Anspruch 1, dadurch gekennzeichnet, daß:

   <u>beim Initialisieren</u> Triaden AE-BZ-ae (4), bzw. Ae-ae-BZ, bzw. BZ-Ae-ae oder Hexaden $AE_A$-$ae_A$-$BZ_A$-$BZ_B$-$AE_B$-$ae_B$ bzw. durch Umstellen dieser sechs Elemente gebildte Hexaden, deren Ae und ae jeweils zusammengehören, in die IT eingegeben werden, danach die Elementepaare BZ-ae (5) bzw, ae-BZ durch Mischen umgestellt werden;
   <u>beim Authentieren</u> der oder die Authentanden jedem oder einer Teilmenge der AE das zugehörige ae mit seinem BZ zuordnet (6).

3. Verfahren nach Anspruch 1, dadurch gekennzeichnet, daß:

   <u>beim Initialisieren</u> zunächst die BZ in einfacher Reihenfolge, ein Teil oder die Gesamtmenge der Assoziationselemente AE und ae versetzt, der Rest nicht-versetzt in die IT eingegeben (7, 10, 11, 12) und danach mit Ausnahme der ersten Triade alle übrigen Triaden gemischt werden (8);
   <u>beim Authentieren</u> der Authentand die Kette aller versetzten Assoziationen AE-ae bildet (9).

4. Verfahren nach Anspruch 1 oder einem der folgenden Ansprüche, gekennzeichnet durch eines oder mehrere der folgenden Merkmale:

   a) jede Polyade (1) enthalt im geordneten Zustand <u>mehrere</u> Paare AE-ae von zusammengehörigen (13) oder versetzten (25) Assoziationselementen, von denen je nur <u>ein</u> Paar für die Authentierung verwendet wird (14, 15 und 26,27);
   b) die Begriffsassoziationen AE-ae gehören zu zwei <u>nur vom Authentanden</u> unterscheidbaren Kategorien (17), von denen nur die Assoziationen der einen Kategorie zum Authentieren verwendet wird (18);
   c) aus der Gesamtmenge der Polyaden wird für das Authentieren nur eine Teilmenge verwendet (19, 20);
   d) nach dem Authentieren werden die Assoziationen AE-ae vertauscht (16) oder ersetzt (23, 24) und/oder die Zeichen $BZ_{alt}$ teilweise oder insgesamt durch andere Zeichen $BZ_{neu}$ (21, 22 und 23, 24) ersetzt;
   e) nach dem Authentieren werden aus den BZ oder EZ charakteristische Authentzahlen AZ erzeugt, die so beschaffen sind, daß lediglich abgeleitete Teildaten übertragen werden und weder der komplette BZ-Satz, noch seine Struktur, noch die originale EZ für einen eventuellen Emulator bei der Übertragung erkennbar sind;
   f) Die EZ sind Zahlen mit sehr vielen Ziffern, von denen bei der Bildung der AZ nur sehr wenige verwendet werden.

5. Verfahren nach Anspruch 1, dadurch gekennzeichnet, daß:

   a) die regelmäßige Anordnung durch zur Gänze oder zum Teil versetzte elektronische Hexaden $AE_A$-$ae_A$-$BZ_A$-$BZ_B$-$AE_B$-$ae_B$ bzw. durch Umstellen dieser sechs Elemente gebildete Hexaden definiert ist (25);

b) die nach dem Mischen ungeordneten Hexaden von zwei Authentanden A und B dadurch in die regelmäßige Anordnung gebracht werden, daß der Authentand A aus den Assoziationselementen $AE_A$ und $ae_A$ (26) und der Authentand B aus den Assoziationselementen $AE_B$ und $ae_B$ (27) je eine geschlossene Kette aller versetzten Assoziationen $AE_A$-$ae_A$ bzw. $AE_B$-$ae_B$ bildet, wonach aus den so geordneten $BZ_A$ und $BZ_B$ zwei Ergebniszahlen EZA und EZB als Kriterium der <u>Selbstauthentierung</u> beider Authentanden errechnet werden (25);

c) Differenzzahlen $DZ_A$ und $DZA_B$ erzeugt werden, mit denen aus den $BZA_{alt}$ und $BZB_{alt}$ der geordneten Hexadenkette neue Basiszahlen $BZA_{neu}$ und $BZB_{neu}$ und aus letzteren zwei neue Ergebniszahlen $EZA_{neu}$ und $EZB_{neu}$ errechnet werden, die nach Übermittlung als Kriterium einer <u>Kontrollauthentierung</u> des Authentanden A durch den Authentanden B und umgekehrt dienen;

d) als Funktion der Basiszahlen $BZA_{neu}$ und $BZB_{neu}$ oder der Ergebniszahlen $EZA_{neu}$ und $EZB_{neu}$ eine für jeden erfolgreichen Gegenauthentvorgang neue Authentzahl AZ gebildet wird, mit welcher zwischen den beiden Authentanden auszutauschende Informationen gekennzeichnet werden.

6. Authentverfahren nach einem oder mehreren der vorstehenden Ansprüche, dadurch gekennzeichnet, daß beim Initialisieren in einem Analysegerät aus jeder der zum Authentieren verwendeten Polyaden zumindest eine der BZ in der regelmäßigen Anordnung für Kontrollzwecke elektronisch gespeichert wird.

7. Verfahren nach Anspruch (4)d, dadurch gekennzeichnet, daß:

a) die BZ-Änderungen nach der Formel

$$BZ_{neu} = BZ_{alt} + DZ$$

bestimmt werden, wobei die Differenzzahl DZ sich aus dem Algorithmus ergibt:

$$DZ_{n+1} = Mod((DZ_n + z_1);10^{z_2})$$
$$= Mod((n+1)z_1;10^{z_2});$$

und:

- $z_1$ eine mit 9 endende ganze Zahl ist;
- $z_2$ eine positive ganze Zahl ist;
- der Index n die n-te Authentierung kennzeichnet;

b) aus n oder einer Funktion von n sowie aus Bestandteilen von $EZ_{neu}$ als Funktion der $BZ_{neu}$ eine variable Authentzahl AZ gebildet wird.

8. Verfahren nach Anspruch 1, dadurch gekennzeichnet, daß nach dem Authentieren Funktionen F(BZ) berechnet werden, mit denen aus einer Liste (28-4), in welcher alphanumerischen und anderen Schriftzeichen eines Textes je eine mehrstellige und nur einmal vorkommende Zahl zugeordnet ist, entnommene Zahlen verschlüsselt werden.

9. Verfahren nach Anspruch 8, dadurch gekennzeichnet, daß

die alphanumerischen und anderen Schriftzeichen, die ihnen entsprechenden Zahlen oder die mit den Funktionen F(BZ) verschlüsselten Zahlen mit Hilfe einer Liste (28,2) vertauscht werden, in welcher die Stelle des Zeichens innerhalb des Textes (28,1) vor dem Vertauschen seiner Stelle nach dem Vertauschen (28,3) gegenübergestellt ist.

10. Verfahren nach Anspruch 8 oder 9, dadurch gekennzeichnet, daß aus allen zu verschlüsselnden Zahlen eine Ergebniszahl EZ errechnet wird.

| Triade | Zahl 1 | $AE_1$ | $ae_1$ |
| --- | --- | --- | --- |
| Polyade | Zahl 2 | $AE_2$ | $ae_2$ |
| | Zahl 3 | $AE_3$ | $ae_3$ |
| | Zahl 4 | $AE_4$ | $ae_4$ |

Hexade

**Abbildung 1**

**Authentkarte**

HEINRICH WENZEL

gültig bis 31-12-96

**DIRECTBANK Himburg**

**Abbildung 2**

| A | richt. Vorname<br>**KOHL** | B |
| --- | --- | --- |
| Boris | | Wolfgang A. |
| Winston | | François |
| Ronald | | Bill |
| John | | Helmut |
| Albert | | Charles |

On / Off

**Abbildung 3**

EP 0 763 802 A2

| A | BZ1 | a |
|---|-----|---|
| B | BZ2 | b |
| C | BZ3 | c |
| D | BZ4 | d |
| E | BZ5 | e |
| F | BZ6 | f |
| G | BZ7 | g |
| H | BZ8 | h |
| I | BZ9 | i |
| J | BZ10 | j |

## Abbildung 4

| BZ5 | e |
|-----|---|
| BZ9 | i |
| BZ10 | j |
| BZ2 | b |
| BZ8 | h |
| BZ6 | f |
| BZ4 | d |
| BZ1 | a |
| BZ7 | g |
| BZ3 | c |

## Abbildung 5

| A | BZ1 | a |
|---|-----|---|
| B | BZ2 | b |
| C | BZ3 | c |
| D | BZ4 | d |
| E | BZ5 | e |
| F | BZ6 | f |
| G | BZ7 | g |
| H | BZ8 | h |
| I | BZ9 | i |
| J | BZ10 | j |

## Abbildung 6

12

| | | |
|---|---|---|
| BZ1 | A | f |
| BZ2 | B | a |
| BZ3 | C | b |
| BZ4 | D | c |
| BZ5 | E | d |
| BZ6 | F | e |
| BZ7 | G | g |
| BZ8 | H | h |
| BZ9 | I | i |
| BZ10 | J | j |

Abbildung 7

| | | |
|---|---|---|
| BZ1 | A | f |
| BZ6 | F | e |
| BZ10 | J | j |
| BZ3 | C | b |
| BZ7 | G | g |
| BZ2 | B | a |
| BZ8 | H | h |
| BZ9 | I | i |
| BZ5 | E | d |
| BZ4 | D | c |

Abbildung 8

| | | |
|---|---|---|
| BZ1 | A | f |
| BZ2 | B | a |
| BZ3 | C | b |
| BZ4 | D | c |
| BZ5 | E | d |
| BZ6 | F | e |
| BZ10 | J | j |
| BZ7 | G | g |
| BZ8 | H | h |
| BZ9 | I | i |

Abbildung 9

| | | |
|---|---|---|
| BZ1 | A | h |
| BZ2 | B | i |
| BZ3 | C | j |
| BZ4 | D | a |
| BZ5 | E | b |
| BZ6 | F | c |
| BZ7 | G | d |
| BZ8 | H | e |
| BZ9 | I | f |
| BZ10 | J | g |

## Abbildung 10

| | | |
|---|---|---|
| BZ1 | A | d |
| BZ2 | B | e |
| BZ3 | C | f |
| BZ4 | D | g |
| BZ5 | E | h |
| BZ6 | F | i |
| BZ7 | G | j |
| BZ8 | H | a |
| BZ9 | I | b |
| BZ10 | J | c |

## Abbildung 11

| | | |
|---|---|---|
| BZ1 | A | b |
| BZ2 | B | c |
| BZ3 | C | d |
| BZ4 | D | e |
| BZ5 | E | f |
| BZ6 | F | g |
| BZ7 | G | h |
| BZ8 | H | i |
| BZ9 | I | j |
| BZ10 | J | a |

## Abbildung 12

| A | a | BZ1 | K | k |
|---|---|-----|---|---|
| B | b | BZ2 | L | l |
| C | c | BZ3 | M | m |
| D | d | BZ4 | N | n |
| E | e | BZ5 | O | o |
| F | f | BZ6 | P | p |
| G | g | BZ7 | Q | q |
| H | h | BZ8 | R | r |
| I | i | BZ9 | S | s |
| J | j | BZ10 | T | t |

## Abbildung 13

| e | BZ5 |
|---|-----|
| i | BZ9 |
| j | BZ10 |
| b | BZ2 |
| h | BZ8 |
| f | BZ6 |
| d | BZ4 |
| a | BZ1 |
| g | BZ7 |
| c | BZ3 |

## Abbildung 14

| A | a BZ1 | K | k |
|---|-------|---|---|
| B | b BZ2 | L | l |
| C | c BZ3 | M | m |
| D | d BZ4 | N | n |
| E | e BZ5 | O | o |
| F | f BZ6 | P | p |
| G | g BZ7 | Q | q |
| H | h BZ8 | R | r |
| I | i BZ9 | S | s |
| J | j BZ10 | T | t |

## Abbildung 15

| P | p | BZ1 | M | m |
|---|---|-----|---|---|
| D | d | BZ2 | F | f |
| S | s | BZ3 | O | o |
| Q | q | BZ4 | A | a |
| E | e | BZ5 | H | h |
| J | j | BZ6 | G | g |
| B | b | BZ7 | N | n |
| T | t | BZ8 | I | i |
| C | c | BZ9 | L | l |
| K | k | BZ10 | R | r |

## Abbildung 16

| A | BZ10 | p |
| B | BZ20 | j |
| C | BZ15 | q |
| D | BZ6 | s |
| E | BZ12 | t |
| F | BZ2 | o |
| G | BZ16 | c |
| H | BZ8 | l |
| I | BZ3 | f |
| J | BZ19 | n |
| K | BZ13 | e |
| L | BZ7 | d |
| M | BZ4 | i |
| N | BZ18 | r |
| O | BZ1 | a |
| P | BZ9 | h |
| Q | BZ14 | k |
| R | BZ17 | g |
| S | BZ5 | m |
| T | BZ11 | b |

## Abbildung 17

| A | BZ10 | p |
| D | BZ6 | s |
| F | BZ2 | o |
| H | BZ8 | l |
| I | BZ3 | f |
| L | BZ7 | d |
| M | BZ4 | i |
| O | BZ1 | a |
| P | BZ9 | h |
| S | BZ5 | m |

## Abbildung 18

| A | BZ1 | a |
|---|---|---|
| B | BZ2 | b |
| C | BZ3 | c |
| D | BZ4 | d |
| E | BZ5 | e |
| F | BZ6 | f |
| G | BZ7 | g |
| H | BZ8 | h |
| I | BZ9 | i |
| J | BZ10 | j |
| K | BZ11 | k |
| L | BZ12 | l |
| M | BZ13 | m |
| N | BZ14 | n |
| O | BZ15 | o |
| P | BZ16 | p |
| Q | BZ17 | q |
| R | BZ18 | r |
| S | BZ19 | s |
| T | BZ20 | t |

Abbildung 19

| L | BZ12 | l |
|---|---|---|
| D | BZ4 | d |
| P | BZ16 | p |
| G | BZ7 | g |
| K | BZ11 | k |
| H | BZ8 | h |
| O | BZ15 | o |
| A | BZ1 | a |
| S | BZ19 | s |
| M | BZ13 | m |

Abbildung 20

| | | |
|---|---|---|
| A | BZ1 | a |
| B | BZ2 | b |
| C | BZ3 | c |
| D | BZ4 | d |
| E | BZ5 | e |
| F | BZ6 | f |
| G | BZ7 | g |
| H | BZ8 | h |
| I | BZ9 | i |
| J | BZ10 | j |

## Abbildung 21

| | | |
|---|---|---|
| A | BZ11 | a |
| B | BZ12 | b |
| C | BZ13 | c |
| D | BZ14 | d |
| E | BZ15 | e |
| F | BZ16 | f |
| G | BZ17 | g |
| H | BZ18 | h |
| I | BZ19 | i |
| J | BZ20 | j |

## Abbildung 22

| | | |
|---|---|---|
| A | BZ1 | f |
| B | BZ2 | a |
| C | BZ3 | b |
| D | BZ4 | c |
| E | BZ5 | d |
| F | BZ6 | e |
| G | BZ7 | g |
| H | BZ8 | h |
| I | BZ9 | i |
| J | BZ10 | j |

## Abbildung 23

| | | |
|---|---|---|
| K | BZ11 | t |
| L | BZ12 | k |
| M | BZ13 | l |
| N | BZ14 | m |
| O | BZ15 | n |
| P | BZ16 | o |
| Q | BZ17 | p |
| R | BZ18 | q |
| S | BZ19 | r |
| T | BZ20 | s |

## Abbildung 24

## Abbildung 25

| | | |
|---|---|---|
| SCHWEITZER<br>Winston | 219/036 | HAENDEL<br>Johann S. |
| CHURCHILL<br>Ronald | 429/152 | BACH<br>Ludwig |
| REAGAN<br>Bill | 176/896 | BEETHOVEN<br>Richard |
| CLINTON<br>Wolfgang A. | 296/025 | WAGNER<br>Robert |
| MOZART<br>François | 342/728 | SCHUMANN<br>Franz |
| MITTERAND<br>John | 401/615 | SCHUBERT<br>Johann W. |
| MAJOR<br>Charles | 769/664 | GOETHE<br>Friedrich |
| DE GAULLE<br>Helmut | 686/410 | SCHILLER<br>Thomas |
| KOHL<br>Boris | 915/099 | MANN<br>Gotthold E. |
| JELZIN<br>Albert | 856/674 | LESSING<br>Georg F. |

EZA = 616 187 491 333 320
EZB = 118 332 065 306 766

## Abbildung 26

| | | | |
|---|---|---|---|
| 1 | CLINTON<br>Wolfgang A. | 296/025 | WAGNER<br>Robert |
| 7 | DE GAULLE<br>Helmut | 686/410 | SCHILLER<br>Thomas |
| 8 | MAJOR<br>Charles | 769/664 | GOETHE<br>Friedrich |
| 9 | MITTERAND<br>John | 401/615 | SCHUBERT<br>Johann W. |
| 5 | JELZIN<br>Albert | 856/674 | LESSING<br>Georg F. |
| 6 | KOHL<br>Boris | 915/099 | MANN<br>Gotthold E. |
| 10 | MOZART<br>François | 342/728 | SCHUMANN<br>Franz |
| 3 | CHURCHILL<br>Ronald | 429/152 | BACH<br>Ludwig |
| 4 | SCHWEITZER<br>Winston | 219/036 | HAENDEL<br>Johann S. |
| 2 | REAGAN<br>Bill | 176/896 | BEETHOVEN<br>Richard |

# Abbildung 27

| | | | |
|---|---|---|---|
| MITTERAND John | 401/615 | SCHUBERT Johann W. | 1 |
| CHURCHILL Ronald | 429/152 | BACH Ludwig | 5 |
| MOZART François | 342/728 | SCHUMANN Franz | 2 |
| REAGAN Bill | 176/896 | BEETHOVEN Richard | 4 |
| JELZIN Albert | 856/674 | LESSING Georg F. | 7 |
| KOHL Boris | 915/099 | MANN Gotthold E. | 8 |
| CLINTON Wolfgang A. | 296/025 | WAGNER Robert | 3 |
| SCHWEITZER Winston | 219/036 | HAENDEL Johann S. | 6 |
| MAJOR Charles | 769/664 | GOETHE Friedrich | 10 |
| DE GAULLE Helmut | 686/410 | SCHILLER Thomas | 9 |

EP 0 763 802 A2

**①** K R Y P T O G R A P H I E

**②**

| 1 | 2 | 3 | 4 | 5 | 6 | 7 | 8 | 9 | 10 | 11 | 12 | 13 |
|---|---|---|---|---|---|---|---|---|----|----|----|----|
| 2 | 12 | 9 | 4 | 10 | 13 | 11 | 8 | 5 | 3 | 1 | 7 | 6 |

**③** H K P P A E I R Y T G R O

**④**

| A | B | C | D | E | F | G | H | I | J | K | L | M |
|---|---|---|---|---|---|---|---|---|---|---|---|---|
| 234 | 684 | 426 | 471 | 269 | 622 | 712 | 452 | 282 | 410 | 697 | 860 | 669 |

| N | O | P | Q | R | S | T | U | V | W | X | Y | Z |
|---|---|---|---|---|---|---|---|---|---|---|---|---|
| 811 | 952 | 456 | 836 | 163 | 059 | 814 | 628 | 787 | 571 | 061 | 443 | 762 |

| 0 | 1 | 2 | 3 | 4 | 5 | 6 | 7 | 8 | 9 | - |
|---|---|---|---|---|---|---|---|---|---|---|
| 512 | 541 | 550 | 318 | 451 | 300 | 698 | 006 | 400 | 198 | 011 |

**⑤**

| BZA | 220 | 941 | 234 | 012 | 746 | 340 | 328 | 547 | 241 | 200 |
|---|---|---|---|---|---|---|---|---|---|---|
| BZB | 952 | 836 | 370 | 620 | 254 | 379 | 875 | 267 | 851 | 292 |

**⑥**

| 14443660 | 1980874 | 13278720 | 5247648 | 6147414 |
|---|---|---|---|---|
| 10330138 | 9996336 | 3824632 | 3860745 | 11908820 |
| 14687848 | 951594 | 16873248 | EZ=231096267065986 | |

## Abbildung 28